# EUROPEAN PATENT SPECIFICATION

(11) **EP 1 787 944 B1**
(45) Date of publication and mention of the grant of the patent: **21.07.2010**
(21) Application number: 06124215.2
(22) Date of filing: 16.11.2006
(51) Int. Cl.: B67D 3/00, A23G 9/30

(54) **Machine for producing and dispensing liquid and semi-liquid consumer food products**
Maschine zur Herstellung und Ausgabe von flüssigen und halbflüssigen Lebensmitteln
Machine pour la fabrication et la distribution de produits alimentaires de consommation liquides et semi-liquides

(30) Priority: 22.11.2005 IT BO20050704
(43) Date of publication of application: 23.05.2007
(73) Proprietor: ALI S.p.A, 20123 Milano (IT)
(72) Inventor: Cocchi, Gino, 40137 Bologna (IT); Zaniboni, Gianni, 40037 Borgonuovo di Sasso Marconi (Bol.) (IT); Lazzarini, Roberto, 42100 Reggio Emilia (IT)
(74) Representative: Ghioni, Carlo Raoul Maria

(56) References cited:
- WO-A-02/35940
- DE-A1- 4 433 820
- US-A- 2 625 242
- US-A- 3 200 999
- US-A- 5 363 746

## Description

The present invention relates to a machine for producing and dispensing liquid and semi-liquid consumer food products.

In particular, without limiting the scope of application, the present invention relates to pasteurising machines, machines for cooking and preserving creams, jellies and sauces of various types, machines for producing and preserving ice cream, such as machines for "soft" ice cream, and similar products.

Machines of the type described above comprise a container or tank for the product processed, means for heating it, and if necessary for cooling it, and means for dispensing the product.

In order to make the temperature of the entire mass of product uniform during heating or cooling, there are also rotary stirring blades in the container.

In the prior art the heating means are of the resistive type and comprise an electric circuit which is closed as a spiral winding in the lateral walls and base wall of the container.

Heating means of this type are not only slow and uneven in their action, but also cause several disadvantages.

Firstly, if the container is not completely full the portion of its inner lateral surface above the level of the product assumes an extremely high temperature, with the consequent formation of crusts on it when it is hit by splashes caused by the action of the stirring blades.

Further disadvantages were found in the case in which the container must also house (for example in machines for producing ice cream) a cooling circuit, consisting of a pipe with a coolant flowing through it, made in the lateral walls and in the base wall of the container.

This limits the space available for the two circuits and means that their paths are extremely close together. As a result, the times for switching between the temperature reached during the heating step and a predetermined cooling temperature are extremely long due to the thermal inertia of the coolant pipe and of the container walls.

It is also known from document WO 02/35940 a device for producing whipped ice cream from a mix, comprising a heating device, a deaerator device, a freezer and an output device which are interconnected by supply lines. A storage container containing mix can be connected to the heating device by a supply line that is located between the freezer and the output device. The invention also relates to a method for producing whipped ice-cream from a mix. Moreover, it is known from document DE 4433820 a device in which the ice material is heated to a predetermined temperature for a predetermined time, using microwaves. The ice material is cooled to storage temperature and is then delivered in the frozen state. During the cooling process the ice material is stirred. Heating and cooling (pasteurisation) are repeated on a daily basis.

It is also known from document US5363746 a kitchen appliance which enables automatic preparation of desserts or other food products according to instructions pre-programmed into the appliance. Programmed preparation steps can include any desired sequence of heating, cooling, and mixing of ingredients placed in a detachable container of the appliance. A dispensing pump may also be provided for dispensing a heated or frozen product from the container.

The aim of the present invention is therefore to overcome the above-mentioned disadvantages.

Accordingly, the present invention achieves this aim with a machine for producing and dispensing liquid and semi-liquid consumer food products which has the characteristics described in one or more of the claims herein.

The technical features of the invention, in accordance with the afore-mentioned aims, are clearly indicated in the claims herein and the advantages of the invention are more apparent in the detailed description which follows, with reference to the accompanying drawings, which illustrate a preferred embodiment without limiting the scope of the invention, in which:
- Figures 1 and 2 are schematic views of two embodiments of a machine for producing and dispensing liquid and semi-liquid food products in accordance with the present invention;
- Figure 3 is an enlarged cross-section of a detail of Figures 1 and 2;
- Figure 4 is a schematic perspective view of another embodiment of the machine in accordance with the present invention;
- Figure 5 is a schematic perspective view of another embodiment of the machine in accordance with the present invention;
- Figure 6 is a schematic side view of another embodiment of a detail of the machine in accordance with the present invention;

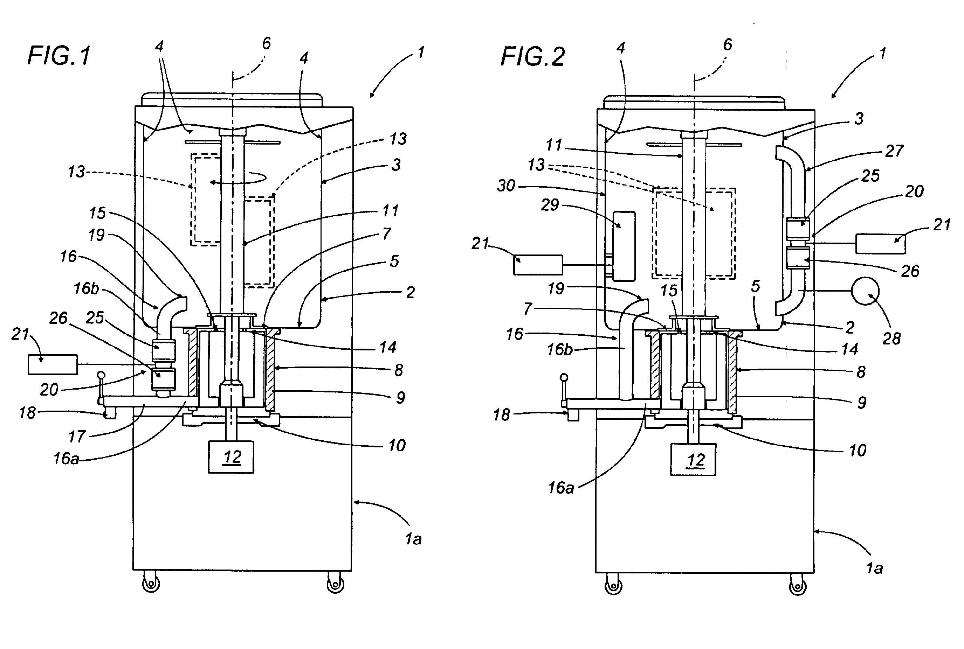

With reference to Figure 1, the numeral 1 denotes as a whole a machine for producing and dispensing liquid and semi-liquid food products, for example a pasteurising machine, for cooking and preserving creams and sauces of various types.

The machine 1 has a base 1a which substantially has the shape of a parallelepiped, inside which there is a container 2 for holding the product.

The container 2 comprises a tank 3 formed by vertical lateral walls 4 and a base wall 5, and it extends according to a vertical longitudinal axis labelled 6.

The container 2 also comprises, below the tank 3 and coaxial with it, at a circular opening 7 made in the base wall 5, a cylindrical chamber 8, formed by a cylindrical wall 9 and a base wall 10.

Passing through the cylindrical chamber 8 and its base wall 10 there is a rotary shaft 11 coaxial with the axis 6 and extending in the tank 3. The shaft 11 is motor-driven, at its lower end, by a motor schematically illustrated with a block 12 and the section of the shaft in the chamber 8, and when required, also the section of the shaft in the tank 3, supports blades 13, forming the product stirring means.

At the opening 7 there is a lid 14 with a central hole for the shaft 11 to pass through and holes 15 to allow communication between the chamber 8 and the tank 3.

The numeral 16 denotes a recirculating pipe connecting the chamber 8, through the cylindrical wall 9, and the tank 3, through the base wall 5.

The recirculating pipe 16 comprises a first, horizontal section 16a connected by a discharge pipe 17 to a dispensing nozzle 18 and a second, vertical section 16b, which has a curved end 19 in the tank 3.

As well as functioning as stirring means, the blades 13 provoke a flow of product along the pipe 16 and therefore product circulation (clockwise in Figure 1) from the cylindrical chamber 8 to the tank 3.

The recirculating pipe 16, which as indicated is connected parallel with the container 2, at its vertical section 16b has means for heating the product, these means labelled 20 as a whole.

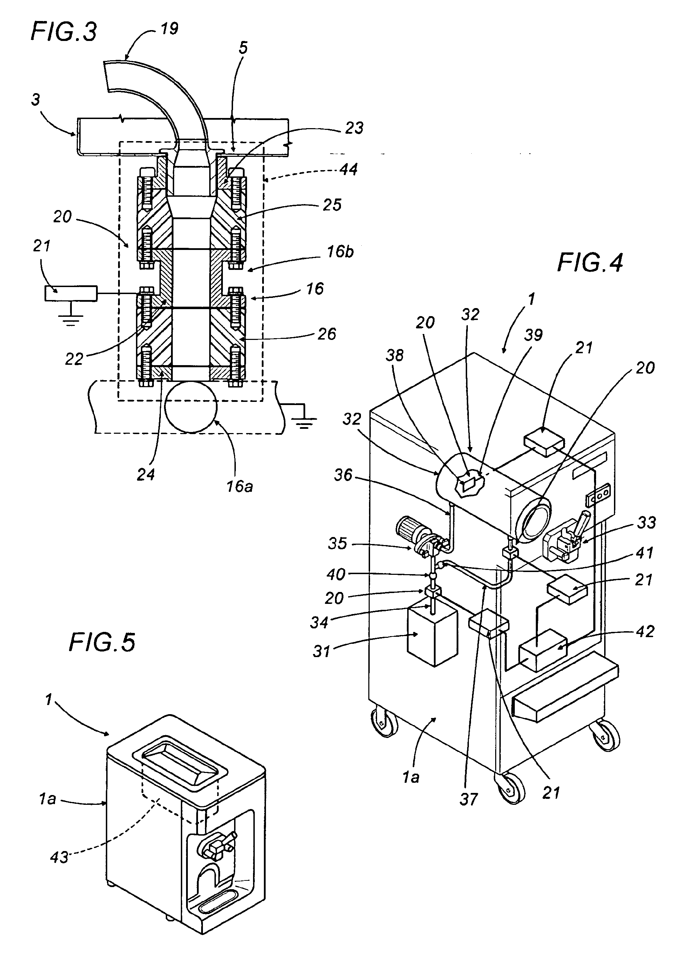

More precisely, with reference also to Figure 3, the heating means comprise an electricity source schematically illustrated as a block 21, connected to a portion 22 of the section 16b made of a conducting material. The heating means 20 also comprise two more portions, upper 23 and lower 24 of the section 16b, also made of a conducting material, connected to the portion 22, with two portions 25 and 26 made of an insulating material in between.

Therefore, said portion 22 constitutes a first electrode and the portions 23 and 24 two second electrodes, which being in contact respectively with the base wall 5 of the tank 3 and the section 16a of the recirculating pipe 16 are earthed.

Therefore, the action of the electricity source 21 results in the generation of a difference in potential between the electrode 22 and the electrodes 23 and 24, with the consequent passage of electric current through the product which flows along the section 16b of the recirculating pipe 16. In this way an ohmic-type dynamic heating device is created, in which the resistive load consists of the product itself rather than an external resistance.

The machine 1 illustrated in Figure 2 differs from the machine 1 in Figure 1 due to the fact that the heating means 20 are not at the recirculating pipe 16, but at a pipe 27 extending parallel with the tank 3. In this case there may be a pump 28 able to make the product flow along the pipe 27.

Again as illustrated in Figure 2, the heating means 20 may alternatively consist of a first electrode 29 in the tank 3 and a second electrode 30 coinciding with the tank 3 itself. In this case, unlike the one previously described, the heating device is of the static type.

Figure 4 shows a machine for producing ice cream of the so-called "soft" type. The numeral 31 denotes the container for the liquid product used to obtain the ice cream and 32 denotes means for transforming the liquid product, comprising a "whipping and freezing" unit consisting of a cylindrical freezing container inside which there is a stirrer and connected to a refrigerating unit, of the known type and not illustrated. In the front part of the cylinder there is a tap 33 for extracting the ice cream.

The numeral 34 denotes an outfeed pipe from the container 31 connected, by a pump 35 and an infeed pipe 36, to the cylinder 32 and the numeral 37 denotes a recirculating pipe which connects the cylinder 32 to the pipe 34 immediately upstream of the pump 35.

The machine in Figure 4 also has heating means, labelled 20 as a whole, for heat-treating the product before each ice cream production cycle and also at the end of each cycle, so as to guarantee product preservation.

These heating means 20, of the type illustrated in Figure 3, may be positioned along the outfeed pipe 34, along the recirculating pipe 37 and, as illustrated in the alternative embodiment in Figure 2, they may be of the static type, that is to say having a first electrode 38 in the cylinder 32 and a second electrode 39 coinciding with a wall of the cylinder 32 itself.

The numeral 40 denotes a valve along the pipe 34 and inserted between the heating means 20 and the recirculating pipe 37 opening point; whilst 41 denotes a valve along the pipe 37. The numeral 21 denotes the electricity sources all controlled by a central control unit illustrated with a block 42.

It should be noticed that the heating means 20 may operate in combination with one another or separately.

Finally, Figure 5 shows a machine 1 for producing "soft" ice cream, which differs from the machine 1 in Figure 4 in that it has a tank 43 in place of the container 31.

It should also be noticed that the heating means 20 may consist of a KIT unit 44, which can be associated with the machine 1 using quick coupling - release means. For example, the KIT unit may be made as illustrated in Figure 3, and may be inserted, for example, along the vertical section 16b of the recirculating pipe 16.

The KIT 44 may be produced and sold separately from the machine 1 and may also be mounted on existing machines.

Finally, it should be noticed that, in accordance with the present invention, the heating means 20 do not consist of external electric heating elements, wound in a spiral in the lateral walls or the base wall of the container, but of electromagnetic means operating directly on the product accumulated in the tank or flowing along a pipe, causing an electric current to flow through the product, heating it rapidly and evenly.

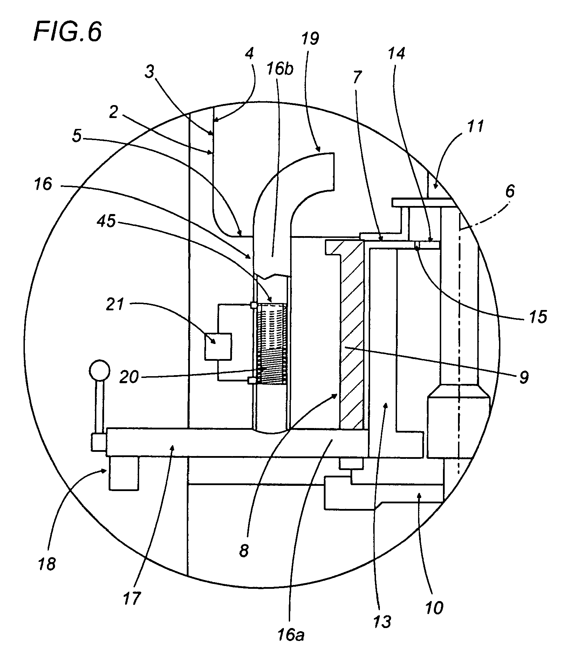

As illustrated in Figure 6, the heating means 20 may be of the inductive type and comprise an induction winding 45 positioned for example in the recirculating pipe 16. Said winding 45, connected to a generator of alternating current at a predetermined frequency 21, by mutual inductance generates a magnetic field and therefore an electric current through the secondary, consisting of the product, which is heated as a result.

## Claims

1. A machine for producing and dispensing liquid and semi-liquid consumer food products, comprising a container (2) for the product, means (20) for heating the product presenting an electromagnetic means operating directly on the product, said heating means comprising an ohmic-type electric circuit (21, 22, 23, 24; 29, 30; 38, 39) and/or inductive-type electric circuit (21, 45) having an induction winding (45); **characterized in that** the product is a resistive component in said ohmic-type electric circuit (21, 22, 23, 24; 29, 30; 38, 39) and/or a secondary of said inductive-type electric circuit (21, 45).

2. The machine according to claim 1, **characterised in that** the electromagnetic means are positioned along a pipe (16, 27, 34, 36, 37) connected to the container (2, 3, 8, 31, 32).

3. The machine according to claim 1, **characterised in that** the electromagnetic means are positioned along a pipe (16, 27, 37) connected parallel with the container (2, 32).

4. The machine according to claim 1, **characterised in that** the electromagnetic means are positioned at least partly in the container (2, 32).

5. The machine according to claim 2 or 3, **characterised in that** the electromagnetic means comprise at least two electrodes (22, 23, 24) positioned along the pipe (16, 27), one of them being connected to a current generator (21).

6. The machine according to claim 4, **characterised in that** the electromagnetic means comprise at least one electrode (29, 38) located in the container (2, 32) and connected to a current generator (21).

7. The machine according to claim 2 or 3, **characterised in that** the winding (45) is positioned close to the product and designed to generate an electromagnetic field able to induce the passage of an electric current on the product.

8. The machine according to any of the foregoing claims from 1 to 7, **characterised in that** the container (2) comprises a tank (3) and below the tank (3) a chamber (8) connected to the tank (3) by a recirculating pipe (16) forming the pipe connected parallel with the container.

9. The machine according to any of the foregoing claims from 1 to 7, also comprising means for transforming the product, **characterised in that** the heating means (20) are positioned along a pipe (34, 36) for feeding the product to the transforming means (32).

10. The machine according to any of the foregoing claims from 1 to 7, also comprising means for transforming the product, **characterised in that** the heating means are positioned along a pipe (37) positioned parallel with the transforming means (32) or inside them.

11. The machine according to any of the foregoing claims from 1 to 10, **characterised in that** the heating means (20) consist of a unit (KIT) (44) which can be associated with the machine (1) using quick coupling - release means.

## Patentansprüche

1. Maschine zur Herstellung und Ausgabe von flüssigen und halbflüssigen Lebensmitteln, beinhaltend einen Behälter (2) für das Produkt, Mittel (20) zum Erhitzen des Produktes, die elektromagnetische Mittel aufweisen, welche direkt auf das Produkt einwirken, wobei diese Heizmittel einen ohmschen Stromkreis (21, 22, 23, 24; 29, 30; 38, 39) und/oder induktiven Stromkreis (21, 45) mit Induktionswicklung (45) beinhalten; wobei die Maschine **dadurch gekennzeichnet ist, dass** das Produkt in dem genannten ohmschen Stromkreis (21, 22, 23, 24; 29, 30; 38, 39) die Widerstandskomponente und/oder in dem genannten induktiven Stromkreis (21, 45) die Sekundärseite bildet.

2. Maschine nach Anspruch 1, **dadurch gekennzeichnet, dass** die elektromagnetischen Mittel entlang einem Rohr (16, 27, 34, 36, 37) angeordnet sind, das mit dem Behälter (2, 3, 8, 31, 32) verbunden ist.

3. Maschine nach Anspruch 1, **dadurch gekennzeichnet, dass** die elektromagnetischen Mittel entlang einem Rohr (16, 27, 37) angeordnet sind, das parallel zu dem Behälter (2, 32) angeschlossen ist.

4. Maschine nach Anspruch 1, **dadurch gekennzeichnet, dass** die elektromagnetischen Mittel zumindest teilweise in dem Behälter (2, 32) angeordnet sind.

5. Maschine nach Anspruch 2 oder 3, **dadurch gekennzeichnet, dass** die elektromagnetischen Mittel mindestens zwei Elektroden (22, 23, 24) beinhalten, die entlang dem Rohr (16, 27) angeordnet sind, von denen eine an einen Stromgenerator (21) angeschlossen ist.

6. Maschine nach Anspruch 4, **dadurch gekennzeichnet, dass** die elektromagnetischen Mittel mindestens eine Elektrode (29, 38) beinhalten, die in dem Behälter (2, 32) angeordnet und an einen Stromgenerator (21) angeschlossen ist.

7. Maschine nach Anspruch 2 oder 3, **dadurch gekennzeichnet, dass** die Wicklung (45) in der Nähe des Produktes angeordnet und dafür ausgelegt ist, ein elektromagnetisches Feld zu erzeugen um die Durchleitung eines elektrischen Stroms an dem Produkt zu induzieren.

8. Maschine nach einem der vorhergehenden Ansprüche von 1 bis 7, **dadurch gekennzeichnet, dass** der Behälter (2) einen Tank (3) beinhaltet und unterhalb des Tanks (3) eine Kammer (8), die mit dem Tank (3) über eine Rückführleitung (16) verbunden ist, die das parallel zum Behälter angeschlossene Rohr bildet.

9. Maschine nach einem der vorhergehenden Ansprüche von 1 bis 7, ferner beinhaltend Mittel zur Produktverarbeitung, **dadurch gekennzeichnet, dass** die Heizmittel (20) entlang einem Rohr (34, 36) angeordnet sind, das zum Zuführen des Produktes zu den Verarbeitungsmitteln (32) dient.

10. Maschine nach einem der vorhergehenden Ansprüche von 1 bis 7, ferner beinhaltend Mittel zur Produktverarbeitung, **dadurch gekennzeichnet, dass** die Heizmittel entlang einem Rohr (37) angeordnet sind, das parallel zu den Verarbeitungsmitteln (32) oder in diesen angeordnet ist.

11. Maschine nach einem der vorhergehenden Ansprüche von 1 bis 10, **dadurch gekennzeichnet, dass** die Heizmittel (20) aus einer Einheit (KIT) (44) bestehen, die über Schnellkupplungs- und -lösemittel mit der Maschine (1) verbunden werden kann.

## Revendications

1. Une machine pour la fabrication et la distribution de produits alimentaires de consommation liquides et semi-liquides, comprenant un contenant (2) pour le produit, des moyens (20) de chauffage du produit présentant des moyens électromagnétiques opérant directement sur le produit, lesdits moyens de chauffage comprenant un circuit électrique de type ohmique (21, 22, 23, 24; 29, 30; 38, 39) et/ou un circuit électrique de type inductif (21, 45) ayant un enroulement d'induction (45) ; ladite machine étant **caractérisée en ce que** le produit est un composant résistif dans ledit circuit électrique de type ohmique (21, 22, 23, 24; 29, 30; 38, 39) et/ou un secondaire dudit circuit électrique de type inductif (21, 45).

2. La machine selon la revendication 1, **caractérisée en ce que** les moyens électromagnétiques sont positionnés le long d'un conduit (16, 27, 34, 36, 37) raccordé au contenant (2, 3, 8, 31, 32).

3. La machine selon la revendication 1, **caractérisée en ce que** les moyens électromagnétiques sont positionnés le long d'un conduit (16, 27, 37) raccordé en parallèle avec le contenant (2, 32).

4. La machine selon la revendication 1, **caractérisée en ce que** les moyens électromagnétiques sont positionnés au moins en partie dans le contenant (2, 32).

5. La machine selon la revendication 2 ou 3, **caractérisée en ce que** les moyens électromagnétiques comprennent au moins deux électrodes (22, 23, 24) positionnées le long du conduit (16, 27), l'une d'elles étant reliée à un générateur de courant (21).

6. La machine selon la revendication 4, **caractérisée en ce que** les moyens électromagnétiques comprennent au moins une électrode (29, 38) située dans le contenant (2, 32) et reliée à un générateur de courant (21).

7. La machine selon la revendication 2 ou 3, **caractérisée en ce que** l'enroulement (45) est positionné à proximité du produit et est destiné à générer un champ électromagnétique à même d'induire le passage d'un courant électrique sur le produit.

8. La machine selon l'une quelconque des revendications précédentes de 1 à 7, **caractérisée en ce que** le contenant (2) comprend un réservoir (3) et, sous ledit réservoir (3), une chambre (8) reliée au réservoir (3) lui-même par un conduit de recirculation (16) formant le conduit raccordé en parallèle au contenant.

9. La machine selon l'une quelconque des revendications précédentes de 1 à 7, comprenant aussi des moyens de transformation du produit, **caractérisée en ce que** les moyens de chauffage (20) sont positionnés le long d'un conduit (34, 36) servant à alimenter le produit aux moyens de transformation (32).

10. La machine selon l'une quelconque des revendications précédentes de 1 à 7, comprenant aussi des moyens de transformation du produit, **caractérisée en ce que** les moyens de chauffage sont positionnés le long d'un conduit (37) positionné parallèlement aux moyens de transformation (32) ou à l'intérieur de ceux-ci.

11. La machine selon l'une quelconque des revendications précédentes de 1 à 10, **caractérisée en ce que** les moyens de chauffage (20) consistent en une unité (KIT) (44) qui peut être associée à la machine (1) par l'intermédiaire de moyens à accouplement - désaccouplement rapide.
